# EUROPÄISCHE PATENTSCHRIFT

(11) **EP 3 331 075 B1**
(45) Veröffentlichungstag und Bekanntmachung des Hinweises auf die Patenterteilung: **06.10.2021**
(21) Anmeldenummer: 17202473.9
(22) Anmeldetag: 20.11.2017
(51) Int. Cl.: H01M 8/0232, H01M 8/0236, H01M 8/0241, H01M 8/0258, H01M 8/0637, H01M 8/0662, H01M 8/124

(54) **BRENNSTOFFZELLE MIT VERBESSERTER ROBUSTHEIT**
FUEL CELL WITH IMPROVED ROBUSTNESS
PILE À COMBUSTIBLE À ROBUSTESSE AMÉLIORÉE

(30) Priorität: 30.11.2016 DE 102016223781
(43) Veröffentlichungstag der Anmeldung: 06.06.2018
(73) Patentinhaber: Robert Bosch GmbH, 70442 Stuttgart (DE)
(72) Erfinder: Heeren, Imke, 70199 Stuttgart (DE); Haeffelin, Andreas, 71665 Vaihingen (DE)

(56) Entgegenhaltungen:
- EP-A1- 2 985 096
- WO-A1-2013/125457
- WO-A2-2004/059765
- JP-A- S6 124 158
- US-A1- 2003 015 431

## Beschreibung

Die vorliegende Erfindung betrifft eine Brennstoffzelle, insbesondere Festoxidbrennstoffzelle, sowie ein Verfahren zur Herstellung einer solchen Brennstoffzelle, mit mindestens einem Trägersubstrat und einem auf dem Trägersubstrat aufgebrachten Funktionsschichtsystem sowie einen Brennstoffzellenstack aufweisend zumindest eine solche Brennstoffzelle. Die Erfindung betrifft auch einen Brennstoffzellenstack mit einer solchen Brennstoffzelle sowie ein Verfahren zur Herstellung eines solchen Brennstoffzellenstacks.

### Stand der Technik

Das Dokument DE 10 2007 034 967 A1 offenbart eine Brennstoffzelle, welche eine pulvermetallurgisch hergestellte Platte aufweist, die einstückig einen porösen Substratbereich umfasst, auf den die elektrochemisch aktiven Zellschichten aufgetragen sind. Weiterer relevanter Stand der Technik ist in der Druckschrift WO 2013/125457 A1 offenbart.

### Offenbarung der Erfindung

Die vorliegende Erfindung ist durch den Gegenstand der Ansprüche definiert und hat demgegenüber den Vorteil, dass das Trägersubstrat zumindest teilweise aus mindestens einem Streckelement, insbesondere Streckmetall, ausgebildet ist. Dadurch wird die mechanische und thermische Stabilität der Brennstoffzelle erhöht.

Durch die in den Unteransprüchen aufgeführten Merkmale sind vorteilhafte Weiterbildungen der Erfindung nach dem Hauptanspruch möglich. So ist es von Vorteil das Trägersubstrat zumindest teilweise aus mindestens einem, insbesondere porösen Füllmaterial ausgebildet ist, wodurch eine homogene Oberfläche mit einer hohen Gasdurchlässigkeit geschaffen werden kann.

In einer vorteilhaften Ausführung ist das Trägersubstrat zumindest teilweise aus einem metallischen Füllmaterial ausgebildet. So ist es möglich mittels eines Sinterprozesses eine besonders hohe Gasdurchlässigkeit zu erreichen.

In einer weiteren vorteilhaften Ausführung ist das Trägersubstrat zumindest teilweise aus einem, insbesondere inerten, keramischen Füllmaterial, vorzugsweise aus Al2O3, ZrO2 und/oder Forsterit, ausgebildet. Dadurch kann erreicht werden, dass das Trägersubstrat während eines Sinterprozesses kaum oder gar nicht mit der Gasatmosphäre reagiert und chemisch stabil bleibt.

In einer weiteren vorteilhaften Ausführung ist das Trägersubstrat zumindest teilweise aus einem katalytischen Füllmaterial, insbesondere einem Reformermaterial, vorzugsweise aus Ni, NiO und/oder Al₂O₃, ausgebildet. So kann ein Reformierungsprozess direkt in der Brennstoffzelle stattfinden.

In einer weiteren vorteilhaften Ausführung ist das Trägersubstrat zumindest teilweise aus einem entschwefelndem Füllmaterial, insbesondere einem Entschwefelungsmaterial, vorzugsweise aus CuO, ZnO, MnO2, Co, Mo und/oder Al2O3, ausgebildet. Dadurch kann ein Entschwefelungsprozess direkt in der Brennstoffzelle stattfinden.

Erfindungsgemäß ist das Trägersubstrat zumindest teilweise aus einem Chrom- und/oder Silicium-reduzierenden Füllmaterial, insbesondere einem Chromgetter aus Mn₂₋ₓCO₁₊ₓO₄ und/oder LaSrMn, ausgebildet. Dadurch kann eine Chrom- und/oder Siliciumvergiftung während eines Betriebs der Brennstoffzelle vermieden werden.

Besonders vorteilhaft ist es, wenn das Funktionsschichtsystem zumindest eine erste Elektrode, insbesondere eine Anode, zumindest eine zweite Elektrode, insbesondere eine Kathode, und einen Elektrolyten aufweist, wobei der Elektrolyt die erste Elektrode und/oder die zweite Elektrode in einem Randbereich umschließt. So kann die Brennstoffzelle mit Hilfe des Elektrolyten abgedichtet sein.

In einer weiteren besonders vorteilhaften Ausführung ist das Trägersubstrat als Interconnector ausgebildet, wodurch keine zusätzlichen Interconnectoren angeordnet werden müssen, um mehrere Brennstoffzellen miteinander zu verbinden.

In einer weiteren besonders bevorzugten Ausführung sind Medienführungskanäle in das Trägersubstrat eingebracht, wodurch eine gute Zuführung, beispielsweise von Brennstoff und/oder Luft, zu dem Funktionsschichtsystem gewährleistet werden kann.

Die Erfindung betrifft auch ein Verfahren zur Herstellung einer Brennstoffzelle, insbesondere einer Brennstoffzelle nach der vorhergehenden Beschreibung, mit mindestens einem Trägersubstrat und einem auf dem Trägersubstrat aufgebrachten Funktionsschichtsystem. Das Verfahren zeichnet sich dadurch aus, dass das Trägersubstrat zumindest teilweise aus mindestens einem Streckmetall und zumindest teilweise aus einem Chrom- und/oder Silicium-reduzierenden Füllmaterial, insbesondere einem Chromgetter, vorzugsweise aus Mn₂₋ₓ CO₁₊ₓO₄ und/ oder LaSrMn ausgebildet wird, wodurch eine Brennstoffzelle mit einer mechanisch hohen Stabilität kostengünstig hergestellt werden kann.

Vorteilhaft ist es, wenn das Trägersubstrat zumindest teilweise aus mindestens einem, insbesondere porösen, Füllmaterial ausgebildet wird, indem Zwischenräume des Streckmetalls mit dem mindestens einen Füllmaterial ausgefüllt werden. So kann das Trägersubstrat besonders homogen ausgestaltet werden.

Besonders vorteilhaft ist es, wenn die Zwischenräume des Streckmetalls mittels eines Beschichtungsverfahrens, insbesondere einem Rakel-, Sprüh-, oder Injektionsverfahren, ausgefüllt werden, wodurch eine besonders homogene Oberfläche kostengünstig ausgebildet werden kann.

Die Erfindung betrifft auch einen Brennstoffzellenstack, welcher sich dadurch auszeichnet, dass dieser zumindest eine Brennstoffzelle nach der vorhergehenden Beschreibung aufweist. So kann ein Leistungsfähiger Brennstoffzellenstack mit einer erhöhten mechanischen Stabilität bereitgestellt werden.

Des Weiteren betrifft die Erfindung ein Verfahren zur Herstellung eines Brennstoffzellenstacks, wobei zumindest eine Brennstoffzelle des Brennstoffzellenstacks mittels eines Verfahrens nach der vorhergehenden Beschreibung hergestellt wird. Dadurch kann ein Leistungsfähiger Brennstoffzellenstack mit einer erhöhten mechanischen Stabilität kostengünstig Hergestellt werden.

### Zeichnungen

In den Zeichnungen sind Ausführungsbeispiele der Erfindung schematisch dargestellt und in der nachfolgenden Beschreibung näher erläutert. Es zeigen
- Fig. 1: eine schematische Draufsicht für verschiedene Ausführungsbeispiele der erfindungsgemäßen Brennstoffzelle,
- Fig. 2: einen schematischen Schnitt eines Ausführungsbeispiels einer erfindungsgemäßen Brennstoffzelle,
- Fig. 3: einen schematischen Schnitt eines weiteren Ausführungsbeispiels einer erfindungsgemäßen Brennstoffzelle,
- Fig. 4: einen schematischen Schnitt eines weiteren Ausführungsbeispiels einer erfindungsgemäßen Brennstoffzelle,
- Fig. 5: einen schematischen Schnitt eines weiteren Ausführungsbeispiels einer erfindungsgemäßen Brennstoffzelle,
- Fig. 6: eine schematische Darstellung eines Ausführungsbeispiels eines Brennstoffzellenstacks mit zwei erfindungsgemäßen Brennstoffzellen.

### Beschreibung

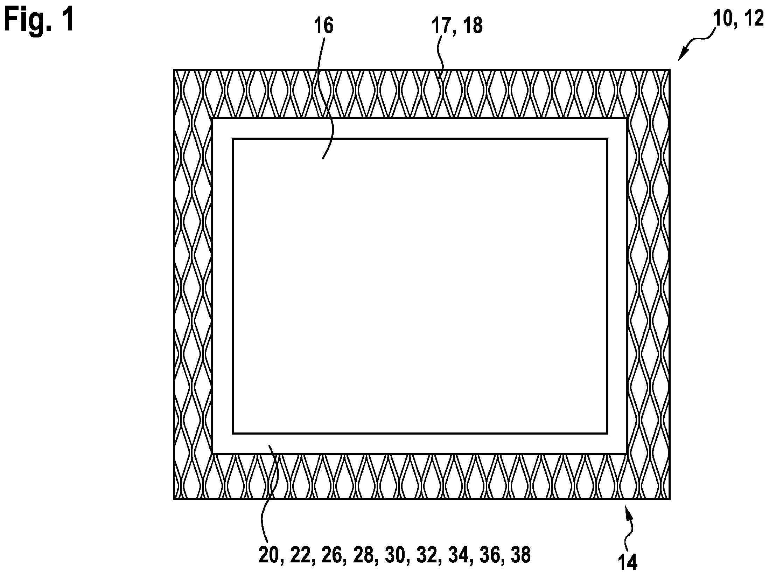

In Figur 1 ist eine schematische Draufsicht der erfindungsgemäßen Brennstoffzelle 10 gezeigt. Die Brennstoffzelle 10 weist ein Trägersubstrat 14 und ein auf dem Trägersubstrat 14 aufgebrachten Funktionsschichtsystem 16 auf. Die Brennstoffzelle zeichnet sich dadurch aus, dass das Trägersubstrat 14 teilweise aus einem Streckelement 17, im gezeigten Fall einem Streckmetall 18, ausgebildet ist. Durch das Streckmetall 18 wird die mechanische und thermische Stabilität der Brennstoffzelle effizient erhöht. Darüber hinaus ist die Brennstoffzelle 10 kompakt und lässt sich dadurch für verschiedene Anwendungen, verwenden.

Im gezeigten Fall handelt es sich bei der Brennstoffzelle 10 um eine Festoxidbrennstoffzelle 12, bzw. SOFC-Brennstoffzelle. Durch die erhöhte mechanische und thermische Stabilität, kann die Brennstoffzelle nun dazu vorgesehen sein, in mobilen Anwendungen zur Erzeugung von Strom und/oder Wärme verwendet zu werden. So lässt sich die Brennstoffzelle 10 beispielsweise in APUs und/oder Range-Extendern verwenden. Auch ist eine Verwendung der Brennstoffzelle 10 zur Elektrolyse denkbar.

Alternativ wäre es auch denkbar, dass die Brennstoffzelle 10, bzw. die Festoxidbrennstoffzelle 12, dazu vorgesehen ist, in stationären Anwendungen zur Erzeugung von Strom und/oder Wärme verwendet zu werden. So könnte die Brennstoffzelle 10 beispielsweise in Kraft-Wärme-Kopplungsanlagen für Gebäude verwendet werden.

Wie erläutert ist das Trägersubstrat 14 teilweise aus einem Streckmetall 18 ausgebildet. Das Streckmetall 18 besteht aus temperaturbeständigem Stahl und weist Maschen mit einer Maschenweite zwischen 50uM und 1000uM auf. Zugleich ist das Trägersubstrat 14 teilweise aus einem, im gezeigten Fall porösen, Füllmaterial 20, bzw. einer Füllmasse 20, ausgebildet, wodurch eine homogene Oberfläche für das aufgebrachte Funktionsschichtsystem geschaffen wird. Zudem weist das Trägersubstrat 14, bestehend aus dem Streckmetall 18 und dem Füllmaterial 20, eine gute Gasdurchlässigkeit auf.

In dem gezeigten nicht erfindungsgemäßen Ausführungsbeispiel handelt es sich bei dem Füllmaterial 20 um ein metallisches Füllmaterial 22. So ist das Trägersubstrat 14 zumindest teilweise aus dem metallischen Füllmaterial 22 ausgebildet. Dadurch ist das Funktionsschichtsystem direkt auf das metallische Füllmaterial aufbringbar. In einem Sinterprozess, in einem Ofen, beispielsweise unter stark reduzierter Atmosphäre (z.B. Wasserstoff oder Formiergas mit 5% H₂ in N₂) kann das Trägersubstrat 14, aufweisend das Streckmetall 18 und das metallische Füllmaterial 22, zusammen mit dem Funktionsschichtsystem 16 gesintert werden, wodurch sich die Metallpartikel des metallischen Füllmaterials 22 und des Funktionsschichtsystems 16 in einem Grenzbereich 24 zusammensintern und ein stark offenporiges Gefüge ausbilden. Durch die Offenporigkeit wird eine freie Diffusion von beispielsweise Brennstoff und/oder Luft durch das Trägersubstrat 14 hin zum Funktionsschichtsystem 16 ermöglicht. Darüber hinaus wird durch die Ausführung ein Abgleich des Wärmeausdehnungskoeffizienten herbeigeführt. Wird die Brennstoffzelle bei einer Temperatur von geringer als 600 °C betrieben, so kann zudem eine Alterung der verwendeten Metallkomponenten, die beispielsweise durch Chrom-Oxidation und/oder -Abdampfung verursacht wird, minimiert bzw. verhindert werden.

In einem weiteren nicht erfindungsgemäßen Ausführungsbeispiel, welches auch der Darstellung aus Figur 1 entspricht, handelt es sich bei dem Füllmaterial 20 um ein inertes, keramisches Füllmaterial 26. So ist das Trägersubstrat 14 zumindest teilweise aus dem inerten, keramischen Füllmaterial 26 ausgebildet. Bei dem inerten, keramischen Füllmaterial 26 kann es sich um Al2O3, ZrO2, Forsterit oder einer Mischung aus diesen Materialien handeln. Dadurch können, beispielsweise während eines Sintervorgangs, Reaktionen mit der Gasatmosphäre vermieden werden. Zudem wird eine höhere chemische Stabilität erreicht. So kann das keramische Füllmaterial 26 bei einer Herstellung zusammen mit dem Streckmetall 18 vorab gesintert oder auch zusammen mit dem Funktionsschichtpacket 16 co-gesintert werden. Darüber hinaus wird durch das keramische Füllmaterial 26 ein Oberflächenschutz für das Streckmetall gegen Oxidation und Abdampfung gebildet, wodurch wiederum die Lebensdauer der Brennstoffzelle 10 erhöht wird. Durch eine gewünschte Porosität des keramischen Füllmaterials 26 kann darüber hinaus ein Unterschied im Wärmeausdehnungskoeffizienten der unterschiedlichen Materialen ausgeglichen werden.

In einem weiteren nicht erfindungsgemäßen Ausführungsbeispiel, welches ebenfalls der Darstellung aus Figur 1 entspricht, handelt es sich bei dem Füllmaterial 20 um ein katalytisches Füllmaterial 28, im geseigten Fall um ein Reformermaterial 30, bestehend aus Ni, NiO und/oder Al₂O₃. So ist das Trägersubstrat teilweise aus dem katalytischen Füllmaterial 28, bzw. dem Reformermaterial 30, beinhaltend Ni, NiO und/oder Al₂O₃, ausgebildet. So ist das Reformermaterial 30 direkt in das Trägersubstrat 14 integriert, wodurch der Reformierungsprozess unmittelbar in, bzw. an, der Brennstoffzelle 10 stattfinden kann und somit eine externes Systembauteil für eine Reformierung nicht mehr zwingend erforderlich ist. Auch werden durch diese Ausführung der Brennstoffzelle 10 die Kosten für eine Herstellung reduziert, da kein separates Systembauteil für eine Reformierung benötigt wird. Darüber hinaus kann durch einen endothermen Reformierungsprozess die Brennstoffzelle 10 gekühlt werden, wodurch das Thermomanagement der Brennstoffzelle 10 verbessert wird.

In einem weiteren nicht erfindungsgemäßen Ausführungsbeispiel, welches ebenfalls der Darstellung aus Figur 1 entspricht, handelt es sich bei dem Füllmaterial 20 um ein entschwefelndes Füllmaterial 32. So ist das Trägersubstrat teilweise aus dem entschwefelnden Füllmaterial 32, insbesondere einem Entschwefelungsmaterial 34, aufweisend CuO, ZnO, MnO2, Co, Mo und/oder Al2O3, ausgebildet. Dadurch werden die Elektroden vor einer Vergiftung durch verunreinigtes Brenngas geschützt. Auch ist das Entschwefelungsmaterial 34 in das Trägersubstrat 14 integriert, was zu einer Kostenreduktion in der Herstellung führt, da keine separate Entschwefelungseinheit zwingend erforderlich ist.

In einem erfindungsgemäßen Ausführungsbeispiel, welches ebenfalls der Darstellung aus Figur 1 entspricht, handelt es sich bei dem Füllmaterial 20 um ein Chrom- und/oder Silicium-reduzierendes Füllmaterial 36. So ist das Trägersubstrat zumindest teilweise aus dem Chrom- und/oder Silicium-reduzierenden Füllmaterial 36, im gezeigten Fall aus einem Chromgetter 38, bestehend aus Mn₂₋ₓCO₁₊ₓO₄ und/oder LaSrMn, ausgebildet. Dadurch werden die Elektroden vor einer Chromvergiftung und/oder einer Siliciumvergiftung geschützt.

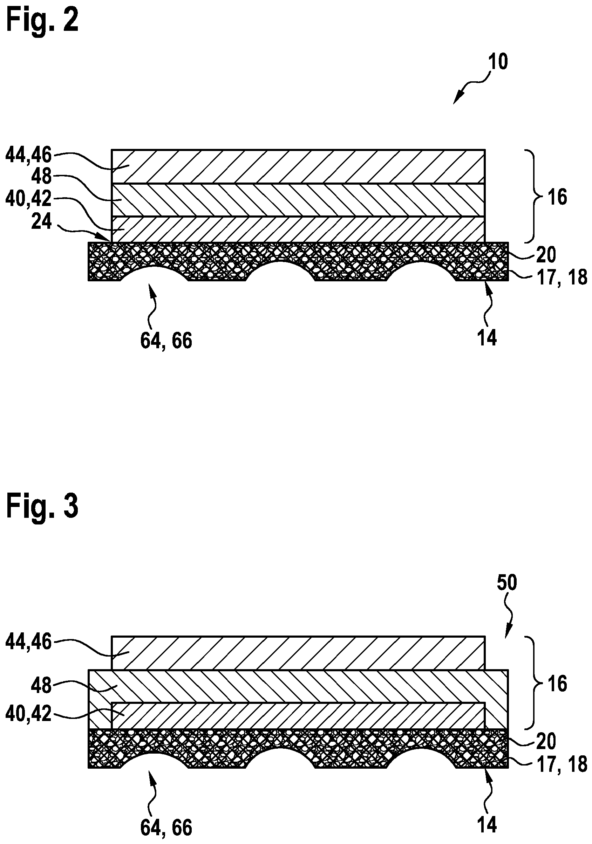

In Figur 2 ist ein schematischer Schnitt eines Ausführungsbeispiels einer erfindungsgemäßen Brennstoffzelle 10 gezeigt. Das weist Funktionsschichtsystem 16 zumindest eine erste Elektrode 40, im gezeigten Fall eine Anode 42, zumindest eine zweite Elektrode 44, im gezeigten Fall eine Kathode 46, und einen Elektrolyten 48 auf.

Die erste Elektrode 40, bzw. die Anode 42, kann beispielsweise aus NiO und/oder Ni mit Yttrium stabilisiertem Zirkoniumoxid (YSZ) bestehen. Die zweite Elektrode 44, bzw. die Kathode 46, kann beispielsweise aus Lanthan-Strontium-Manganoxid (LSM), Lanthan-Strontium-Cobaltoxid (LSC), Lanthan-Strontium-Cobalt-Eisenoxid (LSCF) und/oder einem vergleichbaren Material bestehen. Der Elektrolyt kann beispielsweise zu 5mol% bis 10mol%, im gezeigten Fall zu 8mol%, aus stabilisiertem Zirkoniumoxid (8YSZ) und/oder CGO bestehen. Durch die genannten Zusammensetzungen wird ein besonders effektiver Betrieb der Brennstoffzelle 10 ermöglicht.

Das Funktionsschichtsystem 16 wird während einer Herstellung als Paket in reduzierender Atmosphäre gesintert, wobei der Sauerstoffpartialdruck p_{O2} auf 10⁻¹⁹ bar eingestellt wird. Dies wird über ein Formiergas (N₂ mit 5% H₂) eingestellt werden. Dadurch wird sichergestellt, dass die Metalle nicht oxidieren, die oxidischen Keramiken aber dennoch ohne reduziert zu werden, gesintert werden können.

Das Funktionsschichtsystem 16 ist im direkten Kontakt mit dem Trägersubstrat 14, welches aus dem Streckmetall 18 und einem Füllmaterial 20 ausgebildet ist. Im gezeigten Ausführungsbeispiel grenzt die erste Elektrode 40, bzw. die Anode 42, direkt an das Trägersubstrat 14. Als Füllmaterial 20 eignen sich alle in der vorhergehenden Beschreibung beschriebenen Füllmaterialen 22, 26, 28, 30, 32, 34, 36, 38 und/oder eine Kombination aus diesen.

Figur 3 zeigt einen schematischen Schnitt eines weiteren Ausführungsbeispiels einer erfindungsgemäßen Brennstoffzelle 10. Auch hier weist Funktionsschichtsystem 16 zumindest eine erste Elektrode 40, im gezeigten Fall eine Anode 42, zumindest eine zweite Elektrode 44, im gezeigten Fall eine Kathode 46, und einen Elektrolyten 48 auf. Jedoch umschließt hier der Elektrolyt 48 die erste Elektrode 40, bzw. die Anode 42, in einem Randbereich 50, wodurch die poröse Anode 42 in einem Randbereich abgedichtet wird.

Alternativ ist es auch denkbar, dass der Elektrolyt 48 die zweite Elektrode 44, bzw. die Kathode 46, in dem Randbereich 50 umschließt. Ebenso ist es denkbar, dass der Elektrolyt sowohl die erste Elektrode 40, bzw. die Anode 42, als auch die zweite Elektrode 44, bzw. die Kathode 46, in dem Randbereich 50 umschließt.

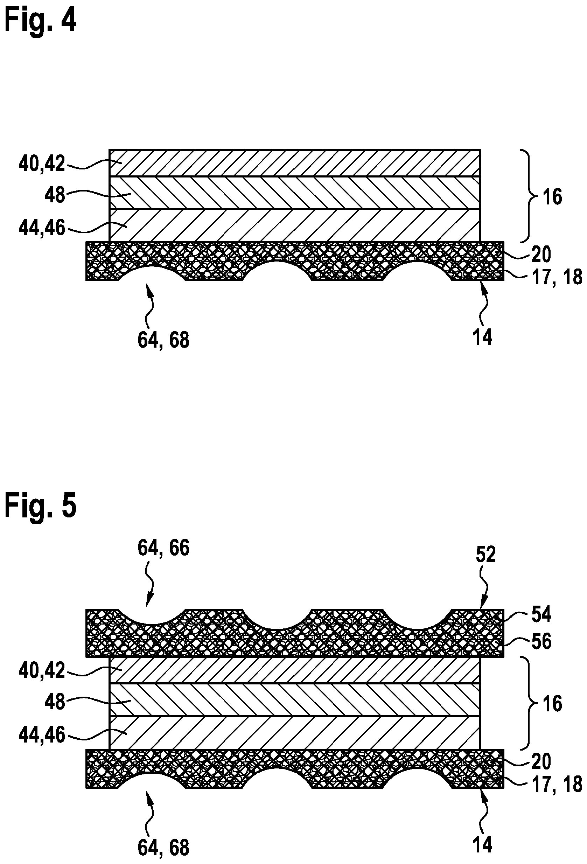

In Figur 4 ist ein schematischer Schnitt eines weiteren Ausführungsbeispiels einer erfindungsgemäßen Brennstoffzelle 10. In dem Ausführungsbeispiel sind die erste Elektrode 40, bzw. die Anode 42, und die zweite Elektrode 44, bzw. die Kathode 46, vertauscht. So grenzt in dem gezeigten Ausführungsbeispiel die erste Elektrode 40, bzw. die Anode 42, direkt an das Trägersubstrat 14.

Figur 5 zeigt einen schematischen Schnitt eines weiteren Ausführungsbeispiels einer erfindungsgemäßen Brennstoffzelle 10. In diesem Fall ist auf das Funktionsschichtsystem 16 ein weiteres Trägersubstrat 52 aufgebracht. Das weitere Trägersubstrat 52 setzt sich aus einem weiteren Streckmetall 54 und einem weiteren Füllmaterial 56 zusammen. Das weitere Trägersubstrat 52 ist baugleich zu dem Trägersubstrat 14. So besteht das weitere Streckmetall 54 und das weitere Füllmaterial 56 des weiteren Trägersubstrats 52, in dem gezeigten Fall, aus denselben Materialien wie auch das Streckmetall 54 und das Füllmaterial 20 des Trägersubstrats 14. Es ist allerdings auch denkbar, dass das Trägersubstrat 14 und das weitere Trägersubstrat 52 aus unterschiedliche Materialien bestehen.

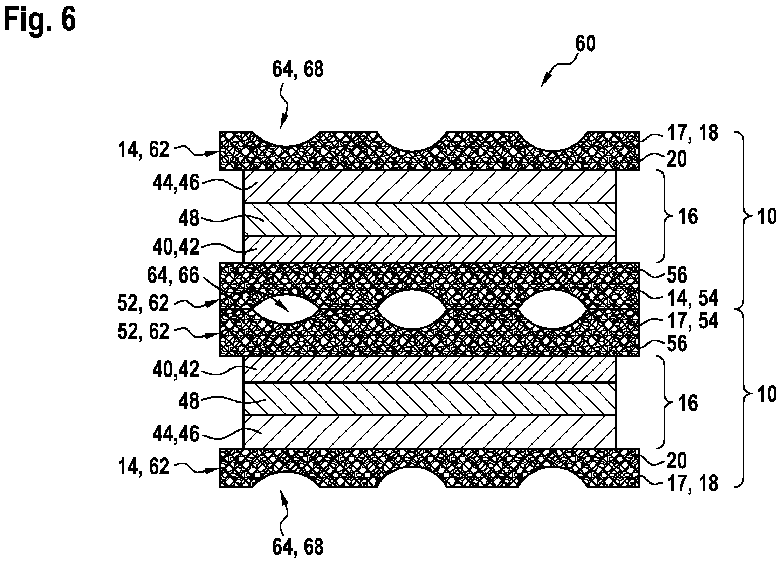

Figur 6 zeigt eine schematische Darstellung eines Ausführungsbeispiels eines Brennstoffzellenstacks 60 mit zwei erfindungsgemäßen Brennstoffzellen 10. In dem gezeigten Ausführungsbeispiel ist das weitere Trägersubstrat 52 als Interconnector ausgebildet. Bringt man eine weitere Brennstoffzelle 10 auf den Brennstoffzellenstack 60 auf, so ist auch das Trägersubstrat 14 als Interconnector ausgebildet. Durch die Ausführung des Trägersubstrats 14, bzw. des weiteren Trägersubstrats 52, als Interconnectoren 62 können die Brennstoffzellen 10 aufeinandergestapelt werden, wodurch die Gesamtleistung effizient erhöht werden kann.

Alternativ ist es aber auch denkbar, dass in jedem der Ausführungsbeispiele gemäß den Figuren 1 bis 6 das Streckmetall 18, bzw. 54, als solches als Interconnector fungiert und/oder zumindest ein Teil eines Interconnectors ausbildet.

In den Ausführungsbeispielen aus den Figuren 2 bis 6, kann man erkennen, dass in das Trägersubstrat 14 Medienführungskanäle 64 eingebracht sind. Durch die Medienführungskanäle 64 kann Brennstoff oder Luft besonders effizient zu dem Funktionsschichtsystem 16 geleitet werden. Grenzt ein Trägersubstrat 14, bzw. das weitere Trägersubstrat 52, an eine erste Elektrode 40, bzw. eine Anode 42, so fungiert ein Medienführungskanal 64 in diesem Trägersubstrat 14 als Brennstoffführungskanal 66. Grenzt ein Trägersubstrat 14, bzw. das weitere Trägersubstrat 52, an eine zweite Elektrode 44, bzw. eine Anode 42, so fungiert ein Medienführungskanal 64 in diesem Trägersubstrat 14 als Luftführungskanal 68.

Die Erfindung betrifft auch ein Verfahren zur Herstellung einer Brennstoffzelle 10. Das Verfahren zeichnet sich dadurch aus, dass das Trägersubstrat 14, bzw. das weitere Trägersubstrat 52, teilweise aus mindestens einem Streckmetall 18 und zumindest teilweise aus einem Chrom- und/oder Silicium-reduzierenden Füllmaterial, insbesondere einem Chromgetter, vorzugsweise aus Mn2-x CO1+xO4 und/oder LaSrMn ausgebildet wird. Dadurch kann eine Brennstoffzelle 10 mit erhöhter mechanischer Stabilität kostengünstig hergestellt werden.

Das Trägersubstrat 14 wird teilweise aus einem porösen Füllmaterial 20 ausgebildet, indem Zwischenräume des Streckmetalls 18 mit dem Füllmaterial 20 ausgefüllt werden. Dadurch wird das Trägersubstrat 14 homogen ausgestaltet.

Die Zwischenräume des Streckmetalls 18 werden mittels eines Beschichtungsverfahrens, für die gezeigten Ausführungsbeispiele mittels eines Rakelverfahrens, ausgefüllt. Dadurch wird eine besonders glatte Oberfläche geschaffen, auf die das Funktionsschichtsystem aufgedruckt werden kann.

Alternativ ist es aber auch denkbar, dass die Zwischenräume des Streckmetalls 18 mittels eines Sprüh- oder Injektionsverfahren ausgefüllt werden.

Die Erfindung Betrifft auch ein Verfahren zur Herstellung eines Brennstoffzellenstacks 60, wie er beispielsweise in Figur 6 gezeigt ist. Das Verfahren zeichnet sich dadurch aus, dass eine Brennstoffzelle 10 des Brennstoffzellenstacks 60 mittels eines Verfahrens nach der vorhergehenden Beschreibung hergestellt wird.

## Patentansprüche

1. Brennstoffzelle (10), insbesondere Festoxidbrennstoffzelle (12), mit mindestens einem Trägersubstrat (14) und einem auf dem Trägersubstrat (14) aufgebrachten Funktionsschichtsystem (16), wobei das Trägersubstrat (14) zumindest teilweise aus mindestens einem Streckelement (17), insbesondere Streckmetall (18) ausgebildet ist, **dadurch gekennzeichnet, dass** das Trägersubstrat zumindest teilweise aus einem Chrom- und/oder Silicium-reduzierenden Füllmaterial (36), insbesondere einem Chromgetter (38), vorzugsweise aus Mn₂₋ₓCO₁₊ₓO₄ und/oder LaSrMn, ausgebildet ist.

2. Brennstoffzelle (10) nach Anspruch 1, **dadurch gekennzeichnet, dass** das Trägersubstrat (14) zumindest teilweise aus mindestens einem porösen Füllmaterial (20) ausgebildet ist.

3. Brennstoffzelle (10) nach einem der Ansprüche 1 oder 2, **dadurch gekennzeichnet, dass** das Trägersubstrat (14) zumindest teilweise aus einem metallischen Füllmaterial (22) ausgebildet ist.

4. Brennstoffzelle (10) nach einem der vorhergehenden Ansprüche, **dadurch gekennzeichnet, dass** das Trägersubstrat (14) zumindest teilweise aus einem, insbesondere inerten, keramischen Füllmaterial (26), vorzugsweise aus Al2O3, ZrO2 und/oder Forsterit, ausgebildet ist.

5. Brennstoffzelle (10) nach einem der vorhergehenden Ansprüche, **dadurch gekennzeichnet, dass** das Trägersubstrat (14) zumindest teilweise aus einem katalytischen Füllmaterial (28), insbesondere einem Reformermaterial (30), vorzugsweise aus Ni, NiO und/oder Al₂O₃, ausgebildet ist.

6. Brennstoffzelle nach einem der vorhergehenden Ansprüche, **dadurch gekennzeichnet, dass** das Trägersubstrat (14) zumindest teilweise aus einem entschwefelndem Füllmaterial (32), insbesondere einem Entschwefelungsmaterial (34), vorzugsweise aus CuO, ZnO, Mn02, Co, Mo und/oder Al2O3, ausgebildet ist.

7. Brennstoffzelle (10) nach einem der vorhergehenden Ansprüche, **dadurch gekennzeichnet, dass** das Funktionsschichtsystem (16) zumindest eine erste Elektrode (40), insbesondere eine Anode (42), zumindest eine zweite Elektrode (44), insbesondere eine Kathode (46), und einen Elektrolyten (48) aufweist, wobei der Elektrolyt (48) die erste Elektrode (40) und/oder die zweite Elektrode (44) in einem Randbereich (50) umschließt.

8. Brennstoffzelle (10) nach einem der vorhergehenden Ansprüche, **dadurch gekennzeichnet, dass** das Trägersubstrat (14) als Interconnector (62) ausgebildet ist.

9. Brennstoffzelle (10) nach einem der vorhergehenden Ansprüche, **dadurch gekennzeichnet, dass** das Medienführungskanäle (64) in das Trägersubstrat (14) eingebracht sind.

10. Verfahren zur Herstellung einer Brennstoffzelle (10), insbesondere einer Brennstoffzelle (10) nach einem der vorhergehenden Ansprüche, mit mindestens einem Trägersubstrat (10) und einem auf dem Trägersubstrat (10) aufgebrachten Funktionsschichtsystem (16), wobei das Trägersubstrat (14) zumindest teilweise aus mindestens einem Streckmetall (18) ausgebildet wird, **dadurch gekennzeichnet, dass** das Trägersubstrat zumindest teilweise aus einem Chrom- und/oder Silicium-reduzierenden Füllmaterial (36), insbesondere einem Chromgetter (38), vorzugsweise aus Mₙ₂₋ₓCO₁₊ₓO₄ und/oder LaSrMn, ausgebildet wird.

11. Verfahren zur Herstellung einer Brennstoffzelle (10) nach Anspruch 10, **dadurch gekennzeichnet, dass** das Trägersubstrat (14) zumindest teilweise aus mindestens einem, insbesondere porösen, Füllmaterial (20) ausgebildet wird, indem Zwischenräume des Streckmetalls (18) mit dem mindestens einen Füllmaterial (20) ausgefüllt werden.

12. Verfahren zur Herstellung einer Brennstoffzelle (10) nach Anspruch 11, **dadurch gekennzeichnet, dass** die Zwischenräume des Streckmetalls (18) mittels eines Beschichtungsverfahrens, insbesondere einem Rakel-, Sprüh-, oder Injektionsverfahren, ausgefüllt werden.

13. Brennstoffzellenstack (60), **dadurch gekennzeichnet, dass** dieser zumindest eine Brennstoffzelle (10) nach einem der Ansprüche 1 bis 9 aufweist.

14. Verfahren zur Herstellung eines Brennstoffzellenstacks (60), insbesondere eines Brennstoffzellenstacks (60) nach Anspruch 13, **dadurch gekennzeichnet, dass** zumindest eine Brennstoffzelle (10) des Brennstoffzellenstacks (60) mittels eines Verfahrens nach einem der Ansprüche 11 bis 12 hergestellt wird.

## Claims

1. Fuel cell (10), in particular solid oxide fuel cell (12), comprising at least one support substrate (14) and a functional layer system (16) applied to the support substrate (14), where the support substrate (14) is formed at least partly by at least one expanded element (17), in particular expanded metal (18), **characterized in that** the support substrate is formed at least partly by a chromium- and/or silicon-reducing filler material (36), in particular a chromium getter (38), preferably composed of Mn₂₋ₓCO₁₊ₓO₄ and/or LaSrMn.

2. Fuel cell (10) according to Claim 1, **characterized in that** the support substrate (14) is formed at least partly by at least one porous filler material (20).

3. Fuel cell (10) according to either Claim 1 or 2, **characterized in that** the support substrate (14) is formed at least partly by a metallic filler material (22) .

4. Fuel cell (10) according to any of the preceding claims, **characterized in that** the support substrate (14) is formed at least partly by a ceramic filler material (26), in particular an inert ceramic filler material (26), preferably composed of Al₂O₃, ZrO₂ and/or forsterite.

5. Fuel cell (10) according to any of the preceding claims, **characterized in that** the support substrate (14) is formed at least partly by a catalytic filler material (28), in particular a reformer material (30), preferably composed of Ni, NiO and/or Al₂O₃.

6. Fuel cell according to any of the preceding claims, **characterized in that** the support substrate (14) is formed at least partly by a desulfurizing filler material (32), in particular a desulfurizing material (34), preferably composed of CuO, ZnO, MnO₂, Co, Mo and/or Al₂O₃.

7. Fuel cell (10) according to any of the preceding claims, **characterized in that** the functional layer system (16) comprises at least one first electrode (40), in particular an anode (42), at least one second electrode (44), in particular a cathode (46), and an electrolyte (48), where the electrolyte (48) encloses the first electrode (40) and/or the second electrode (44) in a peripheral region (50).

8. Fuel cell (10) according to any of the preceding claims, **characterized in that** the support substrate (14) is configured as interconnector (62).

9. Fuel cell (10) according to any of the preceding claims, **characterized in that** the media conducting channels (64) are incorporated into the support substrate (14).

10. Process for producing a fuel cell (10), in particular a fuel cell (10) according to any of the preceding claims, comprising at least one support substrate (10) and a functional layer system (16) applied to the support substrate (10), where the support substrate (14) is formed at least partly by at least one expanded metal (18), **characterized in that** the support substrate is formed at least partly by a chromium- and/or silicon-reducing filler material (36), in particular a chromium getter (38), preferably composed of Mn₂₋ₓCO₁₊ₓO₄ and/or LaSrMn.

11. Process for producing a fuel cell (10) according to Claim 10, **characterized in that** the support substrate (14) is formed at least partly by at least one, in particular porous, filler material (20) by interstices of the expanded metal (18) being filled with the at least one filler material (20).

12. Process for producing a fuel cell (10) according to Claim 11, **characterized in that** the interstices of the expanded metal (18) are filled by means of a coating process, in particular a doctor blade process, spray process or injection process.

13. Fuel cell stack (60), **characterized in that** it comprises at least one fuel cell (10) according to any of Claims 1 to 9.

14. Process for producing a fuel cell stack (60), in particular a fuel cell stack (60) according to Claim 13, **characterized in that** at least one fuel cell (10) of the fuel cell stack (60) is produced by a process according to either of Claims 11 and 12.

## Revendications

1. Cellule à combustible (10), en particulier cellule à combustible à oxyde solide (12), comprenant au moins un substrat porteur (14) et un système de couches fonctionnelles (16) appliqué sur le substrat porteur (14), le substrat porteur (14) étant au moins partiellement formé d'au moins un élément étiré (17), en particulier d'un métal étiré (18), **caractérisée en ce que** le substrat porteur est au moins partiellement formé d'un matériau de remplissage réducteur de chrome et/ou de silicium (36), en particulier un getter de chrome (38), de préférence de Mn₂₋ₓCO₁₊ₓO₄ et/ou LaSrMn.

2. Cellule à combustible (10) selon la revendication 1, **caractérisée en ce que** le substrat porteur (14) est au moins partiellement formé d'au moins un matériau de remplissage poreux (20).

3. Cellule à combustible (10) selon l'une des revendications 1 ou 2, **caractérisée en ce que** le substrat porteur (14) est au moins partiellement formé d'un matériau de remplissage métallique (22).

4. Cellule à combustible (10) selon l'une des revendications précédentes, **caractérisée en ce que** le substrat porteur (14) est au moins partiellement formé d'un matériau de remplissage céramique (26), en particulier inerte, de préférence du Al₂O₃, du ZrO₂ et/ou de la forstérite.

5. Cellule à combustible (10) selon l'une des revendications précédentes, **caractérisée en ce que** le substrat porteur (14) est au moins partiellement formé d'un matériau de remplissage catalytique (28), en particulier d'un matériau de reformage (30), de préférence du Ni, NiO et/ou de l'Al₂O₃.

6. Cellule à combustible selon l'une des revendications précédentes, **caractérisée en ce que** le substrat porteur (14) est au moins partiellement formé d'un matériau de remplissage désulfurant (32), en particulier d'un matériau désulfurant (34), de préférence du CuO, ZnO , MnO₂, Co, Mo et/ou de l'Al₂O₃.

7. Cellule à combustible (10) selon l'une des revendications précédentes, **caractérisée en ce que** le système de couches fonctionnelles (16) comporte au moins une première électrode (40), en particulier une anode (42), au moins une deuxième électrode (44), en particulier une cathode (46), et un électrolyte (48), l'électrolyte (48) enfermant la première électrode (40) et/ou la deuxième électrode (44) dans une région de bord (50).

8. Cellule à combustible (10) selon l'une des revendications précédentes, **caractérisée en ce que** le substrat porteur (14) est conçu comme un élément intercalaire (62).

9. Cellule à combustible (10) selon l'une des revendications précédentes, **caractérisée en ce que** les canaux de guidage de médium (64) sont introduits dans le substrat porteur (14).

10. Procédé de réalisation d'une cellule à combustible (10), en particulier d'une cellule à combustible (10) selon l'une des revendications précédentes, comprenant au moins un substrat porteur (10) et un système de couches fonctionnelles (16) appliqué sur le substrat porteur (10), le substrat porteur (14) étant au moins partiellement formé d'au moins un métal étiré (18), **caractérisé en ce que** le substrat porteur est au moins partiellement formé d'un matériau de remplissage réducteur de chrome et/ou de silicium (36), en particulier un getter de chrome (38), de préférence du Mₙ₂₋ₓCO₁₊ₓO₄ et/ou LaSrMn.

11. Procédé de réalisation d'une cellule à combustible (10) selon la revendication 10, **caractérisé en ce que** le substrat porteur (14) est au moins partiellement formé d'au moins un matériau de remplissage, en particulier poreux, (20) du fait que des espaces intermédiaires du métal étiré (18) sont remplis avec l'au moins un matériau de remplissage (20).

12. Procédé de fabrication d'une cellule à combustible (10) selon la revendication 11, **caractérisé en ce que** les espaces intermédiaires du métal étiré (18) sont remplis au moyen d'un procédé de revêtement, en particulier d'un procédé de raclage, de pulvérisation ou d'injection.

13. Empilement de cellules à combustible (60), **caractérisé en ce qu'**il comporte au moins une cellule à combustible (10) selon l'une des revendications 1 à 9.

14. Procédé de réalisation d'un empilement de cellules à combustible (60), en particulier d'un empilement de cellules à combustible (60) selon la revendication 13, **caractérisé en ce qu'**au moins une cellule à combustible (10) de l'empilement de cellules à combustible (60) est réalisée moyen d'un procédé selon l'une des revendications 11 à 12.
